(19) Europäisches Patentamt
European Patent Office
Office européen des brevets

(11) **EP 1 313 206 B1**

(12) **EUROPÄISCHE PATENTSCHRIFT**

(45) Veröffentlichungstag und Bekanntmachung des Hinweises auf die Patenterteilung:
**04.08.2004 Patentblatt 2004/32**

(51) Int Cl.⁷: **H02M 5/458**, H02J 3/38, H02M 7/219, H02M 7/797

(21) Anmeldenummer: **02025438.9**

(22) Anmeldetag: **15.11.2002**

(54) **Schaltungsanordnung**

Circuit arrangement

Circuit

(84) Benannte Vertragsstaaten:
**AT BE BG CH CY CZ DE DK EE ES FI FR GB GR IE IT LI LU MC NL PT SE SK TR**

(30) Priorität: **17.11.2001 DE 10156694**

(43) Veröffentlichungstag der Anmeldung:
**21.05.2003 Patentblatt 2003/21**

(73) Patentinhaber: **Semikron Elektronik GmbH 90431 Nürnberg (DE)**

(72) Erfinder: **Schreiber, Dejan 90513 Zirndorf (DE)**

(56) Entgegenhaltungen:
DE-A- 4 438 186     US-A- 6 020 713
US-A- 6 093 975

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Schaltungsanordnung zur Erzeugung eines 3-phasigen Wechselstroms mittels eines Stromerzeugers kleiner Leistung (10kVA bis 5MVA) zur Einspeisung in ein Stromnetz. Stromerzeuger kleiner Leistung eignen sich besonders als dezentrale Energieversorgungseinheiten, auch mit Kraft-Wärme-Kopplung, als Notstromaggregate, als dezentrale Aggregate zum Ausgleich von Anforderungsspitzen im Stromnetz oder als Stromversorgung in bestimmten Bereichen ohne Zugang zum öffentlichen Stromnetz.

Derartige Stromerzeuger kleiner oder mittlerer Leistung werden beispielhaft angetrieben durch Gasturbinen, Brennstoffzellen mit integrierter Gasturbine, Biogasmotoren oder Dieselmotoren. Der Vorteil dieser Stromerzeuger liegt in der variablen Abgabe ihrer Leistung. Sie können abhängig vom aktuellen Bedarf geregelt werden, indem die Antriebe der Generatoren in ihrer Leistung geregelt werden. Somit wird nur diejenige Energiemenge verbraucht, die zur Erzeugung der elektrischen Energie benötigt wird.

Windkraftanlagen stellen ebenfalls einen Stromerzeuger mit variabler Abgabe der Leistung dar. Hierbei bilden beeinflussbare Größen wie z.B. der Anstellwinkel der Rotorblätter sowie nicht beeinflussbare Größen wie die Windgeschwindigkeit die Parameter der Ausgangsleistung.

Nachteilig ist hierbei allerdings, dass die von den Generatoren erzeugte Leistung sowohl in ihrer Spannung als auch in ihrer Frequenz in der Regel nicht dem entspricht, was vom ausgangsseitigen Stromnetz gefordert ist. Besonders problematisch ist dies bei anforderungsabhängigen Regelungen. Die meisten der o. g. Antriebe für Stromerzeuger kleiner Leistung laufen mit höheren Geschwindigkeiten und erzeugen somit bei einem ohne Getriebe angeordneten Generator Frequenzen im Kilohertz-Bereich. Dem gegenüber stehen die Anforderungen des Stromnetzes von 50Hz oder 60Hz. Die besonders wirtschaftliche dynamische Anpassung an unterschiedliche Anforderungen bewirkt bei permanent erregten Synchrongeneratoren eine sich verändernde Spannung des Ausgangsstroms. Bei fremd erregten Synchrongeneratortypen kann die Spannung über den Erregungsstrom des Generators angepasst werden, allerdings reduziert dies den Wirkungsgrad des Generators. Es sind verschiedene leistungselektronische Schaltungsanordnungen bekannt, die als Umrichter die Aufgabe der Anpassung der elektrischen Größen bewirken.

Weiterhin kann es notwendig sein, den Stromerzeuger mittels Energie aus dem Stromnetz oder, falls nicht vorhanden, aus einem externen Energiespeicher zu starten. Sinnvoll ist ein anschließendes Laden dieses Energiespeichers.

Aus der US 6,020,713 ist eine Schaltungsanordnung für permanent oder fremd erregte Generatoren bekannt, wobei die Generatorausgangsspannung mittels zweier Dioden-Gleichrichter in die Zwischenkreisgleichspannung gewandelt wird. Hieraus wird mittels eines Ausgangs-Wechselrichters eine Ausgangsspannung erzeugt, die über einen Transformator auf die vom Stromnetz geforderte Spannung angepasst wird. Hiermit können 3-phasige Ausgangsspannungen mit 380V, 400V, 440V, 480V oder 500V und 50Hz oder 60Hz erzeugt werden. Ebenso ist ein 3-phasiges Netz mit Nullleitung zu versorgen. Nachteilig an dieser Schaltungsanordnung ist die Notwendigkeit eines für die maximale Ausgangsleistung dimensionierten Transformators auf der Ausgangseite, da dieser den Stromerzeuger verteuert und den Platzbedarf erhöht.

Ohne den Transformator am Ausgang ist diese Schaltungsanordnung nach US 6,020,713 ebenfalls anwendbar, allerdings ist dann die maximale Höhe der Ausgangsspannung durch die Generatorspannung begrenzt. Nachteilig ist hier wie an der vorhergehend beschriebenen Schaltungsanordnung, dass ein Startvorgang des Stromerzeugers nicht mit einfachen Mitteln möglich ist.

Ebenso stellt die US 6,020,713 eine Schaltungsanordnung mit einer vierten Halbbrücke zur aktiven Regelung des Nullleiters mit den o.g. Nachteilen vor.

Ebenfalls in der US 6,020,713 sowie in der US 6,093,975 sind Schaltungsanordnungen vorgestellt, die den Generator als Starter für die im Stromerzeugerbetrieb diesen Generator antreibende Gasturbine verwenden. Hierzu wird ein zusätzlicher Gleichrichter mittels einer Schaltergruppe mit dem Stromnetz verbunden, gleichzeitig wird der Generator über eine Schaltergruppe mit dem Ausgang des Wechselrichters verbunden und über eine weitere Schaltergruppe wird der Ausgang des Wechselrichters vom Stromnetz getrennt. Der zusätzliche Gleichrichter speist den Zwischenkreis aus dem Stromnetz. Der nachgeordnete Wechselrichter treibt den Generator, der als Motor arbeitet und die Gasturbine startet. In der US 6,093,975 ist eine zusätzliche Schaltungsanordnung vorgesehen, um die Energie für den Start der Gasturbine aus einem Energiespeicher, beispielsweise einer Batterie, zu entnehmen. Hierzu wird mittels eines externen Hochsetzstellers die Batteriespannung angehoben und damit der Zwischenkreis geladen. Dadurch kann der dem Wechselrichter nachgeschaltete Generator die Gasturbine mittels eine Batterie starten.

Nachteilig an diesen beiden Schaltungsanordnungen ist bei einer Lösung mit extremem Transformator, dass dieser die bekannten Nachteile in sich birgt, bei einer Lösung ohne diesen Transformator, dass die maximale Ausgangsspannung direkt an die Generatorspannung gekoppelt ist. Weiterhin erweist sich als nachteilig, dass für den Startvorgang drei mechanische Schaltergruppen notwendig sind bzw. für den Start mittels einer Batterie eine weitere zusätzliche Schaltung vorzusehen ist.

Die vorliegende Erfindung hat die Aufgabe, eine Schaltungsanordnung mit einer möglichst geringen Anzahl von Bauelementen zur Verfügung zu stellen, die einen durch eine Maschine oder eine Windmühle angetriebenen mit variabler Drehzahl rotierenden Generator derart mit einem dreiphasigen 50Hz oder 60Hz Stromnetz verbindet, dass das Stromnetz unabhängig von der Generatordrehzahl oder der Generatorspannung mit hohem Wirkungsgrad gespeist wird, unsymmetrisch belastet werden kann und ohne zwischengeschalteten Transformator direkt an die Schaltungsanordnung angekoppelt ist, und dass der Generator ebenfalls für den Startvorgang der ihn antreibenden Maschine dienen kann, wobei die Startenergie aus dem Stromnetz oder einem externen Energiespeicher entnommen wird.

Diese Aufgabe wird erfindungsgemäß gelöst durch eine Schaltungsanordnung nach Anspruch 1, bevorzugte Weiterbildungen sind in den Unteransprüchen genannt.

Die erfindungsgemäße Schaltungsanordnung besteht aus einer symmetrischen Anordnungen zweier 3-phasiger Wechselrichter, einem aus zwei in Reihe geschalteten Kondensatorgruppen bestehenden Zwischenkreis, dem Generator nachgeordneten Induktivitäten, einem Nullleiter, der einerseits mit einer Sternschaltung der den 3 Phasen zugeordneten Wicklungen des Generators und andererseits mit dem Mittelpunkt der in Reihe geschalteten Kondensatorgruppen verbunden ist.

Im Normalbetrieb der Schaltungsanordnung bei Energiefluss vom Generator zum Stromnetz und bei einer Generatorspannung, die nach der Gleichrichtung, die eine Zwischenkreisspannung erzeugt, ausreichend hoch ist, um mit einem nachgeschalteten Wechselrichter direkt das Stromnetz zu versorgen, wirken die Freilaufdioden des generatorseitigen Wechselrichters als Dioden-Eingangs-Gleichrichter. Dieser erzeugt aus der Wechselspannung des Generators die Zwischenkreisgleichspannung, welche im netzseitigen Wechselrichter in die gewünschte Netzspannung mit der entsprechenden Netzfrequenz gewandelt und über Drosseln dem Stromnetz direkt, d.h. ohne Transformator, zugeführt wird.

Falls bei gleichem Energiefluss die Generatorspannung bedingt z.B. durch einen geringen Energiebedarf und die damit einhergehende niedrige Generatordrehzahl, nach obiger Definition die Generatorspannung zu niedrig ist, wirkt der generatorseitige Wechselrichter zusammen mit den generatorseitigen Drosseln als Hochsetzsteller. Somit kann der Zwischenkreis auf die benötigte Spannung geladen werden und der netzseitige Wechselrichter wandelt diese Gleichspannung in die gewünschte Netzspannung mit der entsprechenden Netzfrequenz um, um sie wiederum über Drosseln dem Stromnetz direkt zuzuführen.

Im Starterbetrieb, also bei Stromfluss zum Generator, der dadurch als Motor betrieben wird und damit zum Starten des eigentlichen Antriebes (z.B. Gasturbine) dient, sind ebenfalls zwei Fälle zu unterscheiden.

Bei Starterbetrieb mit Speisung aus dem Stromnetz wirken die Freilaufdioden des netzseitigen Wechselrichters als Dioden-Eingangsbrücke. Diese erzeugen aus der Netzspannung eine Zwischenkreisgleichspannung. Diese wird durch den generatorseitigen Wechselrichter zum Antrieb des Generators, der jetzt als Motor arbeitet, gewandelt.

Falls keine Spannung aus dem Stromnetz zum Start zur Verfügung steht, wird ein Energiespeicher derart an die Schaltungsanordnung angebunden, dass mittels einer Schaltergruppe der netzseitige Wechselrichter vom Stromnetz getrennt und mittels einer weiteren Schaltergruppe der Energiespeicher mit zwei der drei Ausgänge des netzseitigen Wechselrichters verbunden wird. Bei Starterbetrieb mit Speisung aus einem Energiespeicher wird der netzseitige Wechselrichter vom Stromnetz getrennt und mit dem Energiespeicher verbunden. Da typische Energiespeicher eine geringere Spannung aufweisen als zum Betrieb des Generators als Motor notwendig ist, wirkt der netzseitige Wechselrichter zusammen mit den netzseitigen Drosseln als Hochsetzsteller und erzeugt somit im Zwischenkreis die geforderte Spannung, damit der Generator mittels des generatorseitigen Wechselrichters als Startermotor betrieben werden kann.

Nachfolgend wird eine spezielle Ausgestaltung des erfinderischen Gedankens anhand der Figuren 1 bis 5 näher erläutert.

Fig. 1 zeigt eine Schaltungsanordnung nach dem Stand der Technik ohne Nulleiter für den Energiefluss von einem Generator in ein Stromnetz unter Verwendung eines Transformators.

Fig. 2 zeigt eine Schaltungsanordnung nach dem Stand der Technik mit aktiver Erzeugung eines Nullleiterpotentials für den Energiefluss von einem Generator in ein Stromnetz unter Verwendung eines Hochsetzstellers.

Fig. 3 zeigt eine Schaltungsanordnung nach dem Stand der Technik mit aktiver Regelung des Potentials des Nullleiters für den Energiefluss von einem Generator in ein Stromnetz unter Verwendung zweier Hochsetzsteller.

Fig. 4 zeigt eine Schaltungsanordnung nach Fig. 1 mit der Möglichkeit, den Generator gespeist aus einem Energiespeicher als Motor zu betreiben.

Fig. 5 zeigt eine erfinderische Schaltungsanordnung, die alle Funktionsweisen der Schaltungsanordnung nach den Fig. 2 bis 4 bereitstellt.

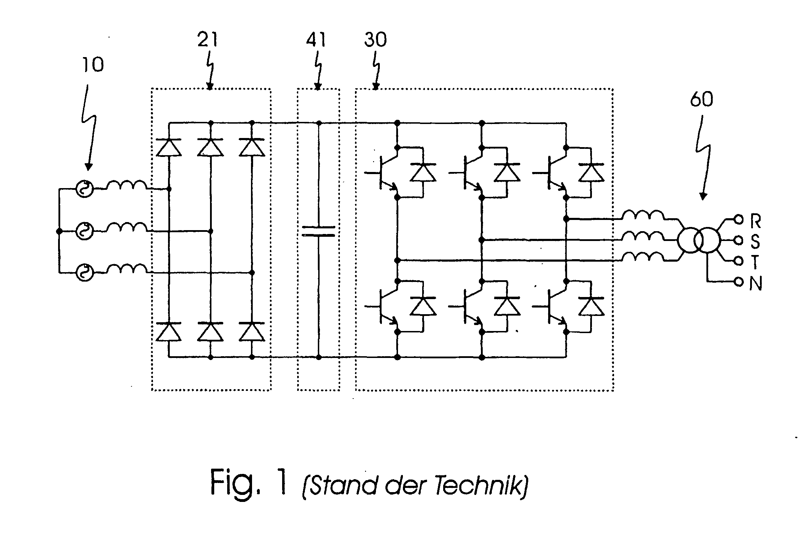

Fig. 1 zeigt eine Schaltungsanordnung nach dem Stand der Technik ohne Nullleiter für den Energiefluss von einem Generator in ein Stromnetz unter Verwendung eines Transformators. Dazu werden die 3 Phasen des Generators (10) mittels eines Brückengleichrichters (21) gleichgerichtet und im Zwischenkreis (41) in einem Kondensator zwischengespeichert. Ein Wechselrichter (30) erzeugt aus dieser Gleichspannung eine sinusförmige Wechselspannung. Zur Anpassung der Spannung an das Netz ist ein Transformator (60) notwendig. Nachteilig an dieser Schaltungsauslegung ist, dass variable Drehzahlen und damit variable Ausgangsspannungen des Generators nur sehr unzureichend kompensiert werden können. Derartige Schaltungsanordnungen eignen sich sehr gut für mit konstanter Drehzahl angetriebene Generatoren.

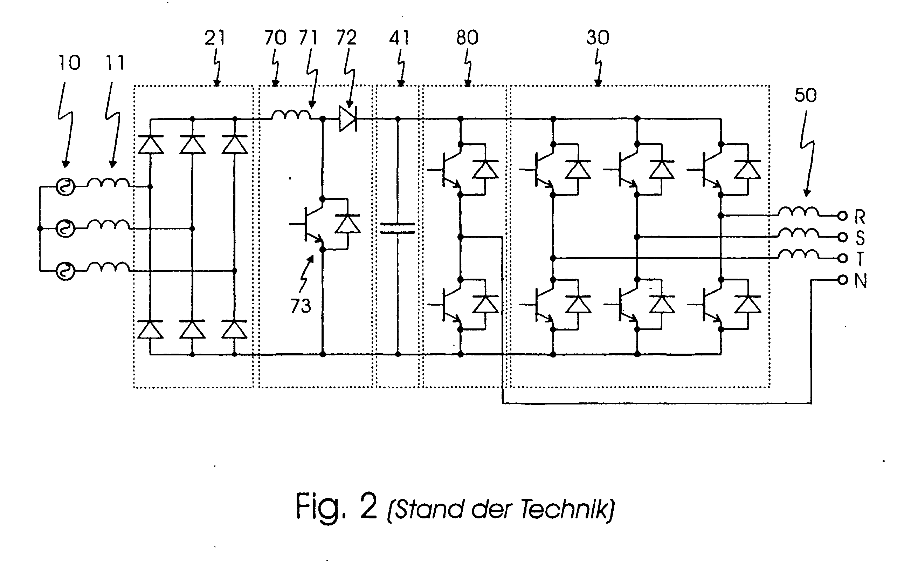

Fig. 2 zeigt eine Schaltungsanordnung nach dem Stand der Technik mit aktiver Erzeugung eines Nullleiterpotentials (N) für den Energiefluss von einem Generator in ein Stromnetz unter Verwendung eines Hochsetzstellers. Im Gegensatz zur Schaltungsanordnung nach Fig. 1 wird hier die Anpassung der Ausgangsspannung nicht mittels eines Transformators durchgeführt, sondern es wird bereits anschließend an den Brückengleichrichters (21) die Spannung mittels eines Hochsetzstellers (70), bestehend aus einer Spule (71), einer Diode (72) sowie einem Schalter (73), hier ein IGBT mit antiparallel geschalteter Diode, die Zwischenkreisspannung auf den benötigten Wert der Zwischenkreisspannung angehoben. Die Spannung im Zwischenkreis (41) richtet sich in bekannter Weise nach der gewünschten Ausgangsspannung (Netzspannung) des Wechselrichters (30). Die Ausgänge des Wechselrichters (30) sind über jeweils eine Drossel (50) mit dem Stromnetz verbunden. Ein Netznullleiter (N) wird durch eine weitere Halbbrückenschaltung (80) aktiv zur Verfügung gestellt.

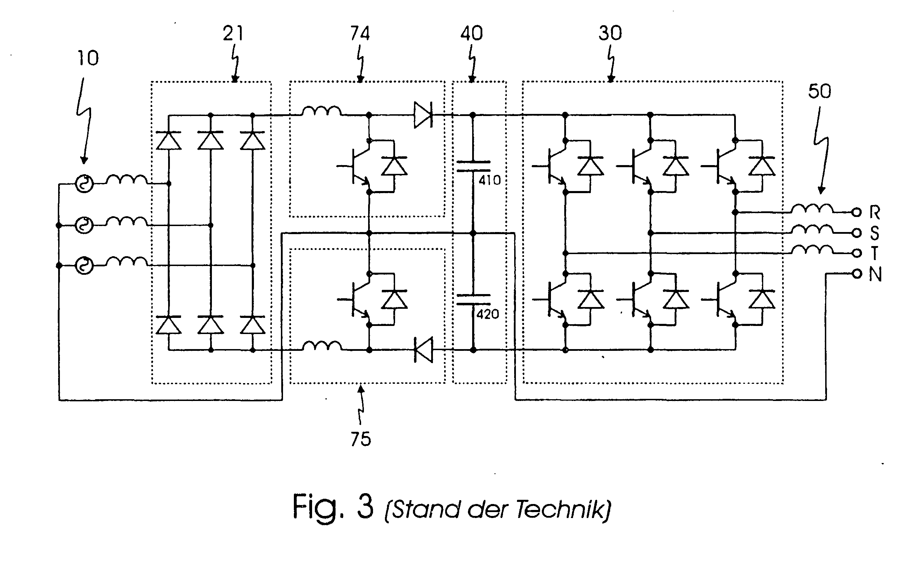

Fig. 3 zeigt eine Schaltungsanordnung mit aktiver Regelung des Potentials des Nullleiters für den Energiefluss von einem Generator in ein Stromnetz unter Verwendung zweier Hochsetzsteller. Die bereits unter Fig. 2 beschriebene Hochsetzstellung wird hier mittels zweier Hochsetzsteller (74, 75) durchgeführt. Die erzeugte Zwischenkreisspannung wird in zwei in Reihe geschalteten Kondensatoren (410, 420) des Zwischenkreises (40) gespeichert. Diese flexible Hochsetzstellung (74 und 75) erlaubt es auf die zusätzliche Halbbrücke (80) zur aktiven Steuerung des Nullleiterpotentials zu verzichten. Der Netznullleiter wird hierfür mit dem Mittelpunkt der Reihenschaltung der Zwischenkreiskondensatoren (410, 420) sowie mit dem Generator (10) verbunden.

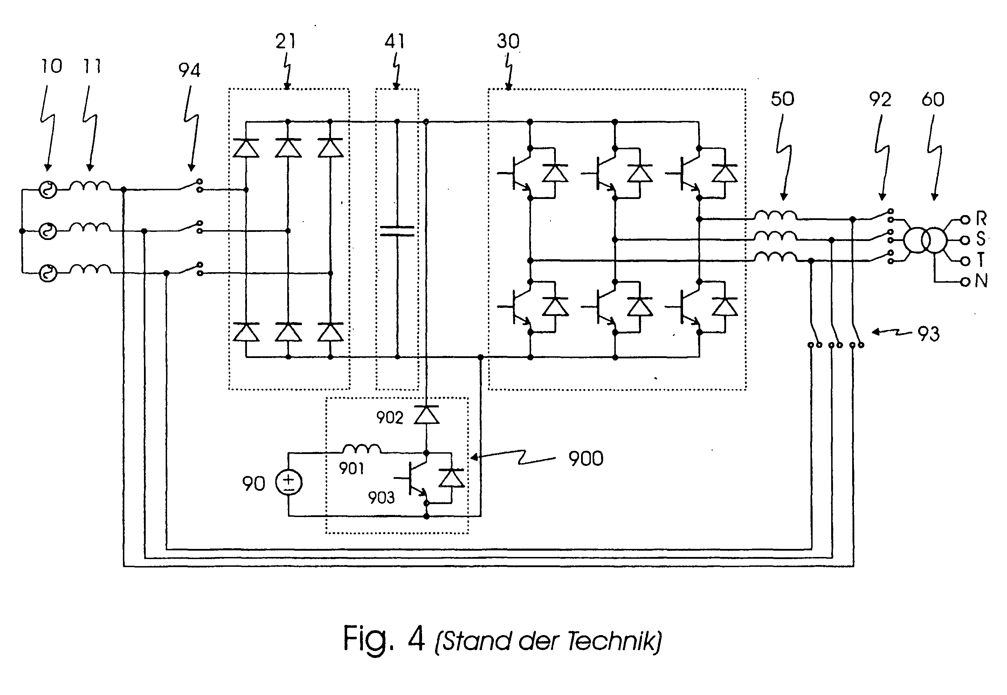

Fig. 4 zeigt eine Schaltungsanordnung nach Fig. 1 mit der Möglichkeit den Generator (10) gespeist aus einem Energiespeicher (90) als Motor zu betreiben. Hierzu wird ein Hochsetzsteller (900) bestehend aus einer Spule (901), einer Diode (902) und einem Schalter (903) an den Zwischenkreis (41) angebunden. Während der Startphase ist der Ausgang des Wechselrichters vom Stromnetz mittels der Schalter (92) getrennt. Weiterhin ist es notwendig, den Ausgang des Wechselrichters (30) mit dem Generator (Motor) (10) mittels der Schalter (93) zu verbinden sowie den Generator (10) vom Eingang des Brückengleichrichters (21) mittels der Schalter (94) zu trennen.

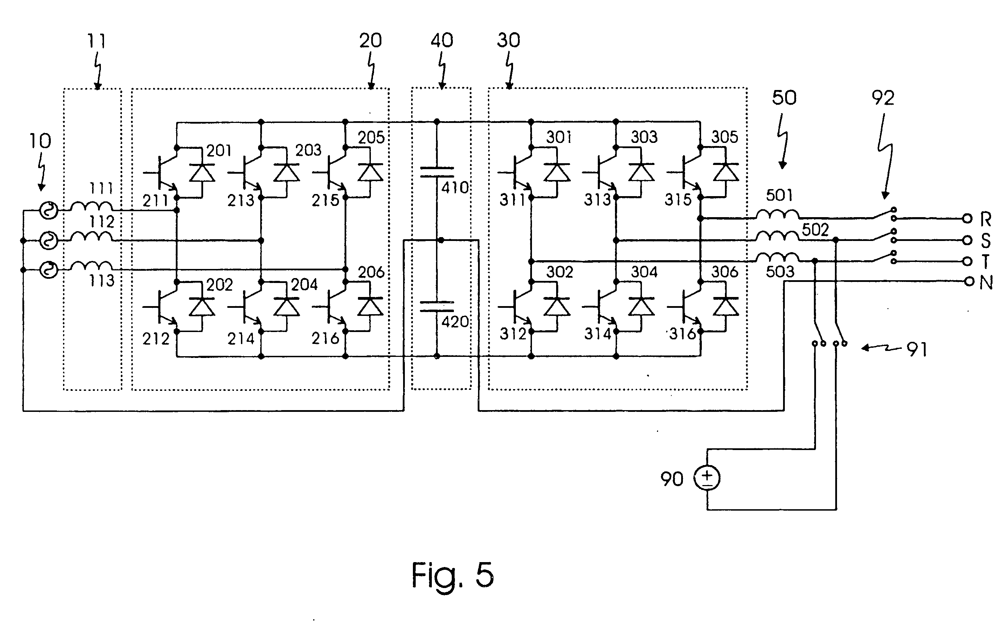

Fig. 5 zeigt eine Ausgestaltung der erfinderischen Schaltungsanordnung, wobei als Generator ein permanent erregter 3-phasiger Generator eingesetzt wird, der abhängig von seiner Drehzahl eine sich verändernde Spannung mit sich verändernder Frequenz erzeugt. Permanent erregte Generator besitzen den Vorteil, dass sie einfach aufgebaut sind und einen sehr hohen Wirkungsgrad in allen Betriebszuständen, also bei verschiedenen Drehzahlen, erreichen. Die Abhängigkeit der Ausgangsspannung von der Drehzahl wird beschrieben durch:

$$U_{gen}i = k \cdot \Phi \cdot n$$

wobei

    n = Drehzahl
    k = Konstante
    Φ = magnetischer Fluss im Generator
    i = 1 ... 3

Die Generatorwicklungen sind in Sternschaltung verbunden, ein Nullleiter N ist ebenfalls herausgeführt.

Die Spannungen $U_{gen}1$, $U_{gen}2$ und $U_{gen}3$ sind über die drei Induktivitäten (111 bis 113) mit dem generatorseitigen Wechselrichter (20) verbunden, wobei die Induktivitäten (111 bis 113) die inneren Induktivitäten des Generators (10) sein können. Falls diese sich beim jeweiligen Generator als zu klein erweisen, werden zusätzliche externe Drosseln eingesetzt. Der Wechselrichter (20) besteht seinerseits aus der 3-phasigen Brückenanordnung mit IGBTs (211 bis 216) als Leistungsschalter und jeweils antiparallel dazu angeordneten Freilaufdioden (201 bis 206).

Der Zwischenkreis (40) wird gebildet durch zwei in Reihe geschaltete Kondensatoren (410, 420) oder entsprechende Kondensatorgruppen. Der Mittelpunkt der Reihenschaltung ist mit dem Nullleiter N verbunden

Dem Zwischenkreis nachgeschaltet ist der netzseitige Wechselrichter (30), der seinerseits topologisch dem generatorseitigen identisch ist und somit ebenfalls aus IGBTs (311 bis 316) mit antiparallel geschalteten Freilaufdioden (301 bis 306) aufgebaut ist. Den drei Ausgängen für die Phasen (R, S, T) sind drei Drosseln (50) nachgeschaltet.

Um einen Start des Stromerzeugers auch ohne Versorgung aus dem Stromnetz zu ermöglichen, ist ein Energiespeicher (90) derart angebunden, dass mittels zweier Schaltergruppen entweder die Ausgänge (R, S, T) des netzseitigen Wechselrichters (30) über die Schaltergruppe (92) mit dem Stromnetz verbunden sind oder die Ausgänge (S, T) des netzseitigen Wechselrichters (30) über die Schaltergruppe (91) mit dem Energiespeicher verbunden sind. Es kann immer nur eine der beiden Schaltergruppen (91, 92) geschlossen sein, um eine Zerstörung des Energiespeichers zu verhindern.

Für die Schaltungsanordnung sind die folgenden, weiter unten erläuterten Betriebszustände möglich:

    1. Starterbetrieb gespeist aus dem Stromnetz.

    2. Starterbetrieb gespeist aus dem Energiespeicher.

    3. Stromerzeugerbetrieb mit einer um ca. den Faktor 1,4 größeren Ausgangsspannung des Generators verglichen zur Netzspannung.

    4. Stromerzeugerbetrieb mit einer Ausgangsspannung des Generators kleiner als das ca. 1,4-fache der Netzspannung.

1. Starterbetrieb gespeist aus dem Stromnetz.

Die Schalter der Schaltergruppe (92) sind geschlossen. Die drei Phasen des Netzstroms laden die Zwischenkreiskondensatoren (410, 420) über die Dioden (301 bis 306) des netzseitigen Wechselrichters (30). Durch geeignete Schaltung der Leistungsschalter (311 bis 316) wird die Zwischenkreisspannung auf dem gewünschten Wert gehalten. Der generatorseitige Wechselrichter (23) wird derart angesteuert, dass der Generator (10) als Motor betrieben wird. Der Motor bewegt nun den eigentlichen Antrieb des Stromerzeugers, z.B. einen Biogasmotor oder eine Gasturbine. Nachdem der Antrieb gestartet wurde, wird die Schaltungsanordnung im Stromerzeugerbetrieb (siehe Punkt 3 und 4) betrieben.

2. Starterbetrieb gespeist aus dem Energiespeicher.

Als Energiequelle für den Startvorgang wird ein Energiespeicher, z.B. ein Akkumulator, verwendet. Die Schalter der Schaltergruppe (92) sind geöffnet, wogegen die Schalter der Schaltergruppe (91) geschlossen sind. Strom kann nun vom Energiespeicher in den netzseitigen Wechselrichter fließen. Die Leistungsschalter (312, 314) werden in einem Pulsbetrieb derart angesteuert, dass folgende Gleichung erfüllt sind:

$$Uzw = Ubatt \cdot Tein / (T-Tein)$$

wobei

    T = Periode der Schaltung
    Tein = Einschaltdauer
    Uzw = Spannung des Zwischenkreises (Soll)
    Ubatt = Spannung des Energiespeichers

Für den Zeitraum Tein ist der Energiespeicher über die Drosseln (503), den Leistungsschalter (312), die Diode (304) und die Drossel (502) kurz geschlossen. Hierbei steigt der Stromfluss von der Batterie in Abhängigkeit der Induktivität der Drosseln (502 und 503) an. Nach dem Abschalten des Leistungsschalters (312) fließt der Strom weiter über die Dioden (301, 304) in den Zwischenkreis. Der netzseitige Wechselrichter (30) wird hier als Hochsetzsteller verwendet, um den Zwischenkreis (40) zu laden. Der generatorseitige Wechselrichter (20) wird wiederum derart angesteuert, dass der Generator (10) als Motor betrieben wird. Der Motor bewegt den eigentlichen Antrieb des Stromerzeugers. Nachdem der Antrieb gestartet wurde, werden die Schalter der Schaltergruppe (91) geöffnet, die Schalter der Schaltergruppe (92) geschlossen und die Schaltungsanordnung in Stromerzeugerbetrieb betrieben.

3. Stromerzeugerbetrieb mit einer um ca. den Faktor 1,4 größeren Ausgangsspannung des Generators verglichen zur Netzspannung.

Der Generator (10) erzeugt hierbei eine Spannung, die ausreichend ist, um nach der Gleichrichtung durch die Dioden (201 bis 206) des generatorseitigen Wechselrichters (20) den Zwischenkreis (40) derart zu laden, dass die durch den netzseitigen Wechselrichter (30) erzeugte 3-phasige Wechselspannung ausreichend groß ist, um Strom in das Stromnetz einzuspeisen.

5. 4. Stromerzeugerbetrieb mit einer Ausgangsspannung des Generators kleiner als das ca. 1,4-fache der Netzspannung.

In diesem Betriebszustand muss die vom Generator (10) erzeugte Spannung mittels Hochsetzsteller angehoben werden, um im Zwischenkreis (40) die notwendige Spannung zu erhalten. Hierzu wird zu jeder Generatorausgangsspannung eine Induktivität sowie eine zugeordnete Halbbrücke des generatorseitigen Wechselrichters eingesetzt. Für Ugen1 werden die Induktivität (111), die Leistungsschalter (211, 212) sowie die Dioden (201, 202) eingesetzt, für die Spannungen Ugen2 und Ugen3 die analogen Induktivitäten (112 bzw. 113), Leistungsschalter (213, 214 bzw. 215, 216) und Dioden (203, 204 bzw. 205, 206).

Beispielhaft wird die Phase Ugen1 detailliert beschrieben. Falls am Kondensator (410) eine Spannung kleiner als ½ der Sollspannung des Zwischenkreises anliegt, wird während der positiven Halbwelle von Uges1 der Leistungsschalter (212) eingeschaltet. Dadurch entsteht ein Kurzschluss von Ugen1 über die Induktivität (111), den Leistungsschalter (212) und den Kondensator (420). Nach dem Abschalten des Leistungsschalters (212) wird der Kondensator (410) durch die Spannung Ugen1 durch die in der Induktivität (111) gespeicherten Energie über die Diode (201) geladen. Dabei wird ausgenutzt, dass in der Induktivität (111) Energie gespeichert ist. Im Fall der negativen Halbwellen wird der Kondensator (410) auf analoge Weise über die Leistungsschalter (211) und die Diode (202) geladen. Es ergibt sich somit die Wirkungsweise zweier Hochsetzsteller.

Die beiden anderen Phasen Ugen2 und Ugen3 tragen in analoger Weise zur Ladung des Zwischenkreises (40) bei. Durch die beschriebene Wirkungsweise der Hochsetzsteller wird die Spannung im Zwischenkreis (40) derart geregelt, dass jeweils die Hälfte der Spannung auf den Kondensator (410) bzw. den Kondensator (420) entfällt. Da der Nullleiter im Mittelpunkt zwischen den beiden Kondensatoren angeschlossen ist, liegt das Potential des Nullleiters immer genau in der Mitte der Zwischenkreisspannung.

Dies hat nicht nur den Vorteil, dass auch bei geringen Ausgangsspannungen des Generators die erforderliche Zwischenkreisspannung anliegt, sondern auch dass bei unsymmetrischer Belastung der Ausgangphasen (R, S ,T) des netzseitigen Wechselrichters keine Phasenspannungsabweichungen auftreten.

Aufgrund der o.g. Funktionsweise der erfinderischen Schaltungsanordnung kann diese ohne schaltungstechnische Änderungen an Stromnetze mit verschiedenen Spannungen z.B. 380V, 400V, 440V, 480V oder 500V und Frequenzen 50Hz oder 60Hz angepasst werden.

**Patentansprüche**

1. Schaltungsanordnung zur Verbindung eines mit variabler Geschwindigkeit angetriebenen 3-phasigen Generators (10) mit einem 3-phasigen (R, S, T) Stromnetz bestehend für den Energiefluss vom Generator '(10) zum Stromnetz aus einem generatorseitigen Dioden-Gleichrichter (20), generatorseitige Hochsetzstellem (11 in Kombination mit 20), einem aus zwei in Reihe geschalteten Kondensatorgruppen (410, 420) gebildeten Zwischenkreis (40) und einem netzseitigen Wechselrichter (30), sowie für den Energiefluss von einem Energiespeicher (90) oder dem Stromnetz (R, S, T) zum Generator (10) aus einem netzseitigen Dioden-Gleichrichter (30), netzseitigen Hochsetzstellem (50 in Kombination mit 30), einem aus zwei in Reihe geschalteten Kondensatorgruppen (410, 420) gebildeten Zwischenkreis (40) und einem generatorseitigen Wechselrichter (20), wobei die Dioden-Gleichrichter, die Hochsetzsteller und die Wechselrichter gebildet werden aus je drei generatorseitigen Induktivitäten (11), je drei netzseitigen Induktivitäten (501, 502, 503) und den generator- und netzseitigen Wechselrichtern selbst, die ihrerseits aus Transistoren (211 bis 216), 311 bis 316) und Dioden (201 bis 206, 301 bis 306) bestehen, sowie einem Netznullleiter N verbunden mit dem Stempunkt des Generators sowie dem Mittelpunkt der Reihenschaltung der Kondensatorgruppen(410, 420).

2. Schaltungsanordnung nach Anspruch 1 **dadurch gekennzeichnet, dass** beim Vorsehen der Speisung des Generator (10) durch einen Energiespeicher (90) zwei Schaltergruppen (91, 92) vorgesehen sind zur wechselseitigen Trennung des Ausgangs des netzseitigen Wechselrichter (30) vom Stromnetz (R, S, T) bzw. vom Energiespeicher (90).

3. Schaltungsanordnung nach Anspruch 1 und 2 **dadurch gekennzeichnet, dass** der Energiespeicher (90) bei Trennung des netzseitigen Wechselrichter (30) vom Stromnetz (R, S, T) mittels der Schalter (92) und Verbindung des Energiespeichers (90) mit des netzseitigen Wechselrichter (30) mittels der Schalter (91) durch die Schaltungsanordnung geladen wird.

4. Schaltungsanordnung nach Anspruch 1 **dadurch gekennzeichnet, dass** die Wechselrichter (20, 30) aus Halbleiterschaltem, vorzugsweise parallel geschalteten IGBTs (insulated gate bipolar transistoren) (211 - 216, 311 - 316) mit antiparallel geschalteten Freilaufdioden (201 - 206, 301 - 306) gebildet werden.

5. Schaltungsanordnung nach Anspruch 1 **dadurch gekennzeichnet, dass** die generatorseitigen Induktivitäten (11) durch die internen Induktivitäten des Generators (10) oder durch zusätzliche externe Induktivitäten gebildet werden.

6. Schaltungsanordnung nach Anspruch 1 **dadurch gekennzeichnet, dass** die drei Phasen des Generators (10) in Stemanordnung verschaltet sind.

7. Schaltungsanordnung nach Anspruch 1 **dadurch gekennzeichnet, dass** der Generator (10) ein permanent oder ein fremd erregter Synchrongenerator oder ein Asynchrongenerator ist.

**Claims**

1. Circuit arrangement for connection of a 3-phase generator (10) driven with variable speed, with a 3-phase (R, S, T) power grid comprising, for the energy flow from the generator (10) to the power grid, a generator-side diode rectifier (20), generator-side boost converters (11 in combination with 20), an intermediate circuit formed from two series-connected capacitor groups (410, 420) and a line-side inverter (30), and for the energy flow from an energy accumulator (90) or the power grid (R, S, T) to the generator (10), a line-side diode rectifier (30), line-side boost converters (50 in combination with 30), an intermediate circuit (40) formed from two series-connected capacitor groups (410, 420) and a generator-side inverter (20), with the diode rectifiers, the boost converters and the inverters being formed in each case from three generator-side inductances (11), three line-side inductances (501, 502, 503) and the actual generator-side and line-side inverters which in turn comprise transistors (211 to 216, 311 to 316) and diodes (201 to 206, 301 to 306), and a neutral N connected with the star point of the generator and the mid-point of the series circuit of the capacitor groups (410, 420).

2. Circuit arrangement according to claim 1, **characterised in that** on provision of the supply of the generator (10) by an energy accumulator (90), two switch groups (91, 92) are provided for alternating isolation of the output of the line-side inverter (30) from the power grid (R, S, T) or energy accumulator (90).

3. Circuit arrangement according to claims 1 and 2, **characterised in that** the energy accumulator (90) is charged by the circuit arrangement on isolation of the line-side inverter (30) from the power grid (R, S, T) by means of the switches (92), and on connection of the energy accumulator (90) with the line-side inverter (30) by means of the switches (91).

4. Circuit arrangement according to claim 1, **characterised in that** the inverters (20, 30) are formed by semi-conductor switches, preferably parallel-connected IGBT's (insulated gate bipolar transistors) (211-216, 311-316) with anti-parallel connected free-wheeling diodes (201-206, 301-306).

5. Circuit arrangement according to claim 1, **characterised in that** the generator-side inductances (11) are formed by the internal inductances of the generator (10) or by additional external inductances.

6. Circuit arrangement according to claim 1, **characterised in that** the three phases of the generator (10) are connected in a star arrangement.

7. Circuit arrangement according to claim 1, **characterised in that** the generator (10) is a permanently or externally excited synchronous or asynchronous generator.

**Revendications**

1. Circuit destiné à relier un générateur triphasé (10) entraîné avec une vitesse variable à un réseau de courant triphasé (R, S, T) et constitué, pour le flux d'énergie du générateur (10) au réseau, d'un redresseur à diodes (20) du côté du générateur, d'élévateurs de tension (11 en combinaison avec 20) du côté du générateur, d'un circuit intermédiaire (40) formé de deux groupes de condensateurs (410, 420) branchés en série et d'un onduleur (30) du côté du réseau ainsi que, pour le flux d'énergie d'un accumulateur d'énergie (90) ou du réseau (R, S, T) au générateur (10), d'un redresseur à diodes (30) du côté du réseau, d'élévateurs de tension (50 en combinaison avec 30) du côté du réseau, d'un circuit intermédiaire (40) formé de deux groupes de condensateurs (410, 420) branchés en série et d'un onduleur (20) du côté du générateur, les redresseurs à diodes, les élévateurs de tension et les onduleurs étant formés à chaque fois de trois inductances (11) du côté du générateur, à chaque fois de trois inductances (501, 502, 503) du côté du réseau et des onduleurs eux-mêmes du côté du générateur et du côté du réseau, lesquels onduleurs sont constitués de transistors (211 à 216, 311 à 316) et de diodes (201 à 206, 301 à 306), ainsi que d'un conducteur neutre de réseau N qui est relié au point neutre du générateur ainsi qu'au point central du montage en série des groupes de condensateurs (410, 420).

2. Circuit selon la revendication 1, **caractérisé par le fait que**, lorsque l'alimentation du générateur (10) est prévue au moyen d'un accumulateur d'énergie (90), deux groupes d'interrupteurs (91, 92) sont prévus pour séparer alternativement du réseau de courant (R, S, T) ou de l'accumulateur d'énergie (90) la sortie de l'onduleur (30) du côté du réseau.

3. Circuit selon la revendication 1 ou 2, **caractérisé par le fait que**, lorsque l'onduleur (30) du côté du réseau est séparé du réseau de courant (R, S, T) au moyen de l'interrupteur (92) et lorsque l'onduleur (30) du côté du réseau est relié à l'accumulateur d'énergie (90) au moyen de l'interrupteur (91), l'accumulateur d'énergie (90) est chargé par le circuit.

4. Circuit selon la revendication 1, **caractérisé par le fait que** les onduleurs (20, 30) sont formés de commutateurs à semi-conducteurs, de préférence des IGBT (Insulated Gate Bipolar Transistor) branchés en parallèle (211 à 216, 311 à 316) avec des diodes de roue libre branchées tête-bêche (201 à 206, 301 à 306).

5. Circuit selon la revendication 1, **caractérisé par le fait que** les inductances (11) du côté du générateur sont formées par les inductances internes du générateur (10) ou par des inductances externes supplémentaires.

6. Circuit selon la revendication 1, **caractérisé par le fait que** les trois phases du générateur (10) sont branchées selon un montage en étoile.

7. Circuit selon la revendication 1, **caractérisé par le fait que** le générateur (10) est un générateur synchrone à excitation permanente ou un générateur synchrone à excitation extérieure ou un générateur asynchrone.

Fig. 1 (Stand der Technik)

Fig. 2 (Stand der Technik)

Fig. 3 (Stand der Technik)

Fig. 4 (Stand der Technik)

Fig. 5